(19) Europäisches Patentamt
European Patent Office
Office européen des brevets

(11) **EP 3 846 076 A1**

(12) **EUROPEAN PATENT APPLICATION**

(43) Date of publication:
**07.07.2021 Bulletin 2021/27**

(51) Int Cl.:
***G06K 9/00*** (2006.01)     ***G06K 9/34*** (2006.01)

(21) Application number: **20216900.9**

(22) Date of filing: **23.12.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **30.12.2019 CN 201911393558**

(71) Applicant: **Nextvpu (Shanghai) Co., Ltd.**
**Shanghai, 201203 (CN)**

(72) Inventors:
• **CHEN, Lingqi**
  **Shanghai (CN)**

• **CAI, Haijiao**
  **Shanghai (CN)**
• **FENG, Xinpeng**
  **Shanghai (CN)**
• **ZHOU, Ji**
  **Shanghai (CN)**

(74) Representative: **Bardehle Pagenberg**
**Partnerschaft mbB**
**Patentanwälte Rechtsanwälte**
**Prinzregentenplatz 7**
**81675 München (DE)**

(54) **METHOD, DEVICE, CHIP CIRCUIT AND COMPUTER PROGRAM PRODUCT FOR RECOGNIZING MIXED TYPESET TEXTS**

(57)     The present disclosure provides a method, a device, a chip circuit and a computer program product for recognizing mixed typeset texts. The method includes: detecting one or more bounding boxes each containing a text paragraph from a picture; determining a text typesetting direction of each bounding box based on geometric characteristics of the bounding box, where the text typesetting direction includes horizontal and vertical; and inputting the bounding box into a text recognition network corresponding to the text typesetting direction, based on the text typesetting direction of the bounding box, to recognize texts in the bounding box.

FIG. 2

EP 3 846 076 A1

**Description**

TECHNICAL FIELD

The present disclosure relates to the field of image processing, and more specifically, to a method for recognizing mixed typeset texts, a device for implementing the method, a chip circuit, and a computer program product.

BACKGROUND OF THE INVENTION

Currently, text detection and recognition technologies are usually based on a single typesetting direction, such as horizontal or vertical. For example, for books published in mainland China or Europe and the United States, the text typesetting direction is usually horizontal. The text recognition process for these books includes using horizontally typeset texts to train a neural network model to generate a corresponding recognition model. On the other hand, for books published in Hong Kong, Macau, Taiwan or Japan, the text typesetting direction is usually vertical. The text recognition process for these publications includes using vertically typeset texts to train a neural network to generate a corresponding recognition model. Therefore, in most application scenarios such as book text recognition and manual recognition, using single directionally typeset texts to train the neural network may meet the requirement.

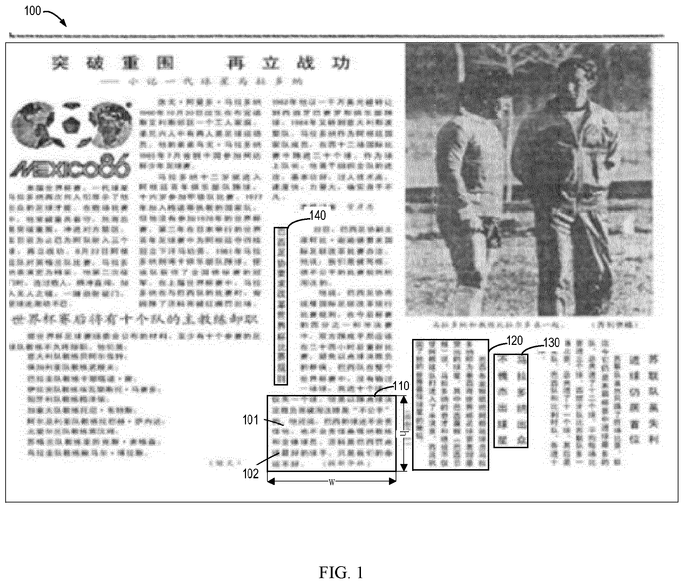

However, in other cases, such as for newspapers, magazines and other mixed typeset publications, a training model using single directionally typeset texts does not work properly. FIG. 1 illustrates a schematic diagram of a picture 100 of mixed typeset newspaper. As shown in FIG. 1, the picture 100 includes both a plurality of horizontally typeset text paragraphs (such as the text paragraph shown in box 110) and a plurality of vertically typeset text paragraphs (such as the text paragraphs shown in boxes 120, 130 and 140).

In this case, the training model using single directionally typeset texts cannot work properly. For example, a recognition model trained using horizontally typeset texts will have a low recognition rate when recognizing vertically typeset texts as shown in boxes 120, 130, and 140, and the semantics of the sentences may be completely wrong.

SUMMARY OF THE INVENTION

In view of the above-mentioned problems, the present disclosure provides a solution for recognizing mixed typeset texts, which may recognize texts in a picture containing two text typesetting directions of horizontal and vertical.

According to one aspect of the present disclosure, a method for recognizing mixed typeset texts is provided. The method includes: detecting one or more bounding boxes each containing a text paragraph from a picture; determining a text typesetting direction of each bounding box based on geometric characteristics of the bounding box, where the text typesetting direction includes horizontal and vertical; and inputting the bounding box into a text recognition network corresponding to the text typesetting direction, based on the text typesetting direction of the bounding box, to recognize texts in the bounding box.

According to another aspect of the present disclosure, a device for recognizing mixed typeset texts is provided. The device includes: a memory on which computer program codes are stored; and a processor configured to execute the computer program codes to implement the method as described above.

According to yet another aspect of the present disclosure, a computer-readable storage medium is provided. The computer-readable storage medium has computer program codes stored thereon, which, when executed, implement the method described above.

According to yet still another aspect of the present disclosure, there is provided a chip circuit including circuit units configured to implement the method as described above when powered on.

With the solution of the present disclosure, the typesetting direction of individual parts of the mixed typeset texts may be accurately identified, so that different recognition models may be used to recognize these parts so as to improve the accuracy of the text recognition.

BRIEF DESCROPTION OF THE DRAWINGS

FIG. 1 illustrates a schematic diagram of a picture of mixed typeset newspaper;

FIG. 2 shows a flowchart of a method for recognizing mixed typeset texts according to embodiments of the present disclosure;

FIG. 3 shows a schematic diagram of a step for determining the text typesetting direction of a bounding box according to one embodiment of the present disclosure;

FIG. 4 shows a schematic diagram of a step for determining the text typesetting direction of a bounding box according to another embodiment of the present disclosure;

FIG. 5 shows a schematic diagram of a step for determining the text typesetting direction of a bounding box according to a further embodiment of the present disclosure; and

FIG. 6 shows a schematic block diagram of an exemplary device that may be used to implement embodiments of the present disclosure.

DESCRIPTION OF PREFERRED EMBODIMENTS

Hereinafter, each embodiment of the present disclosure will be described in detail with reference to the accompanying drawings, so as to better understand the purpose, features and advantages of the present disclosure. It should be understood that the embodiments shown in the drawings are not intended to limit the scope of the present disclosure, but merely to illustrate the essential spirit of the technical solution of the present disclosure.

In the following description, for the purpose of illustrating various inventive embodiments, certain specific details are set forth to provide a thorough understanding of various inventive embodiments. However, those skilled in the art will recognize that the embodiments maybe practiced without one or more of these specific details. In other situations, well-known devices, structures, and technologies associated with the present application may not be shown or described in detail so as to avoid unnecessarily obscuring the description of the embodiments.

Unless the context requires otherwise, throughout the specification and claims, the word "including" and its variants, such as "comprising" and "having" should be understood as an open and inclusive meaning, that is, should be interpreted as "including, but not limited to".

Throughout the specification, reference to "one embodiment" or "an embodiment" means that a specific feature, structure, or characteristic described in combination with the embodiment is included in at least one embodiment. Therefore, the appearances of "in one embodiment" or "in an embodiment" in various places throughout the specification do not necessarily all refer to the same embodiment. In addition, specific features, structures, or characteristics may be combined in any manner in one or more embodiments.

In addition, the terms "first", "second", "third", and "fourth" used in the specification and claims are only used to distinguish various objects for clarity of description, and do not limit the size or other order of the objects described.

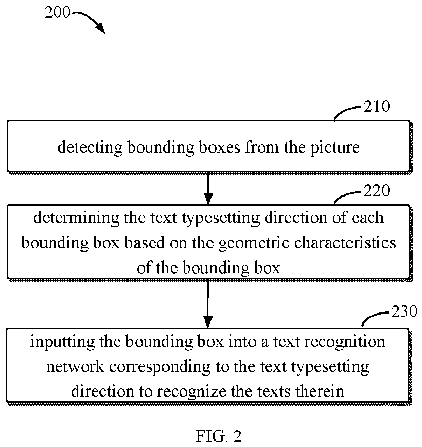

FIG. 2 shows a flowchart of a method 200 for recognizing mixed typeset texts according to embodiments of the present disclosure. The operation object of the method 200 may be, for example, the newspaper picture 100 as shown in FIG. 1, where the picture 100 includes one or more horizontally typeset text paragraphs (such as the text paragraph shown in box 110) and one or more vertically typeset text paragraphs (such as the text paragraphs shown in boxes 120, 130, and 140).

First, in the step 210, one or more bounding boxes each containing a text paragraph may be detected from the picture 100. Here, a bounding box refers to a region of a target object obtained in the process of detecting the target object from the image using various bounding box algorithms. Depending on the bounding box algorithm used and the characteristics of the object to be detected, the sizes of the detected bounding boxes may be different. For example, the minimum bounding box usually includes only one row of text or one column of text. In the present disclosure, a bounding box refers to a bounding box formed by analyzing the typesetting of the picture to be detected and connecting the neighboring minimum bounding boxes according to the results of the typesetting analysis. Such a bounding box usually includes one paragraph, so in the present disclosure, it may be referred to as a paragraph bounding box. Note that depending on the results of the typesetting analysis, the bounding box may include only one minimum bounding box (that is, one row or column of text), or multiple minimum bounding boxes. Those skilled in the art may understand that, in the present disclosure, various known or future-developed bounding box algorithms may be used to detect text paragraphs without limiting the scope of the present disclosure.

In one embodiment, the step 210 may include inputting the picture 100 into the text detection neural network to obtain the text response regions in the picture 100. Herein, a text response region refers to the part of the picture that contains texts, which is in contrast to the background part of the picture. To obtain the text response regions of the picture 100 means dividing the picture 100 to distinguish the text part from the background part of the picture 100. In an example, a texture-based method may be used to obtain the text response regions of the picture. The principle of the texture-based method is that any text is an object with unique texture characteristics, and the text part of the image may be separated from the background part by characterizing the texture characteristics of the text. The text response regions obtained by the texture-based method may basically be clearly distinguished from the background part, but the intersecting part between it and the background part may be blurred, and the contrast between the two parts may not be large enough for accurate segmentation of the text part.

Therefore, after acquiring the text response regions of the picture 100, the step 210 may further include performing smoothing processing, binarization processing, and neighborhood connection processing on the text response regions to obtain the minimum bounding boxes. As mentioned above, the size of a minimum bounding box usually includes only one row or column of text.

After obtaining the minimum bounding box, the step 210 may further include performing typesetting analysis on the picture 100, and generating the bounding box based on the minimum bounding boxes according to the result of the typesetting analysis. For example, if the blank area around the minimum bounding box is relatively large, the minimum bounding box is considered to be relatively independent, which may be separately regarded as a bounding box described herein. The generated bounding box may be, for example, the bounding boxes 110, 120, 130, and 140 shown in FIG. 1, where for the bounding box 140, it is determined to only include one column of text according to the result of the typesetting analysis (for example, the size of the blank area around the bounding box 140), that is, a minimum bounding box constitutes a bounding box as described in this disclosure.

The texture-based method is described above as an example. However, the present disclosure is not limited thereto. The method for obtaining the text response regions may also include, for example, connected domain-based methods or a combination of a texture-based method and a connected domain-based method, etc., which will not be detailed here.

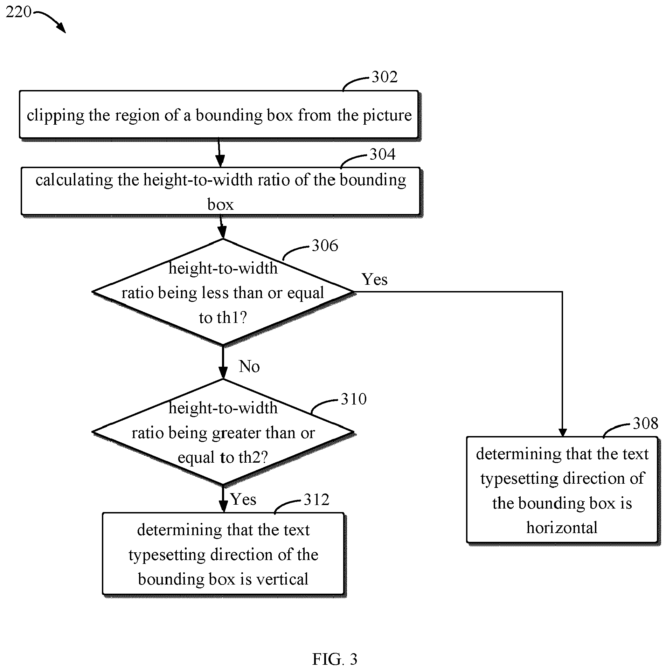

Next, the method 200 further includes a step 220, wherein the text typesetting direction of each bounding box is determined based on the geometric characteristics of the bounding box. That is, it is determined whether the text paragraph in the bounding box is typeset horizontally or vertically. In some embodiments, the geometric characteristics of the bounding box may include the height-to-width ratio (or width-to-height ratio) of the bounding box. In other embodiments, the geometric characteristics of the bounding box may include the characteristics of the text paragraph in the bounding box. More specifically, the characteristics of the text paragraph in the bounding box may include, for example, the text characteristics of the text paragraph in the bounding box (such as the height of the text row, the ratio of the text row, the width of the text column, the ratio of the text column, or the relationship between the ratio of the text row and the ratio of the text column, etc.) and/or the text spacing characteristics (such as the height of the text spacing row, the ratio of the text spacing row, the width of the text spacing column, the ratio of the text spacing column, or the relationship between the ratio of the text spacing row and the ratio of the text spacing column, etc.). Hereinafter, some embodiments of the step 220 for determining the text typesetting direction of the bounding box according to the present disclosure will be described in detail through FIGS. 3 to 5.

FIG. 3 shows a schematic diagram of the step 220 for determining the text typesetting direction of the bounding box according to one embodiment of the present disclosure.

As shown in FIG. 3, the step 220 may include a sub-step 302, in which the region of a bounding box obtained in the step 210 is clipped from the picture 100. The following description takes the bounding box 110 shown in FIG. 1 as an example.

Next, in the sub-step 304, the height-to-width ratio k of the bounding box 110 is calculated, and then in the sub-step 306, it is determined whether the height-to-width ratio k is less than or equal to a first threshold th1. Here, the first threshold th1 is a threshold for judging a horizontally typeset bounding box, which may be an empirical value or a statistical value, or a value preset according to regulations such as publication specifications.

The height-to-width ratio k of the bounding box 110 maybe simply calculated as:

$$k = h/w,$$

where h refers to the height of the bounding box 110, and w refers to the width of the bounding box 110, as shown in FIG. 1. The height h and the width w may be in units of pixels, for example.

If the judgment result of the sub-step 306 is "Yes", that is, it is determined that the height-to-width ratio k is less than or equal to the first threshold th1, then in the sub-step 308, it is determined that the text typesetting direction of the bounding box 110 is horizontal. In this case, it may be determined that the judgment result of the sub-step 306 being "No" indicates that the text typesetting direction of the bounding box 110 is vertical (not shown in the figure).

Alternatively, a second threshold th2 may be used to further determine the text typesetting direction of the bounding box 110. As shown in FIG. 3, if the judgment result of the sub-step 306 is "No", that is, it is determined that the height-to-width ratio k is greater than the first threshold th1, the step 220 may further include a sub-step 310, wherein it is further determined whether the height-to-width ratio k is greater than or equal to a second threshold th2, where the second threshold th2 is greater than the first threshold th1. Here, the second threshold th2 is a threshold for judging whether the bounding box is vertical, and it may also be an empirical value or a statistical value, or a value preset according to regulations such as publication specifications.

If the judgment result of the sub-step 310 is "Yes", that is, it is determined that the height-to-width ratio k is greater than or equal to the second threshold th2, in the sub-step 312, it is determined that the text typesetting direction of the bounding box 110 is vertical.

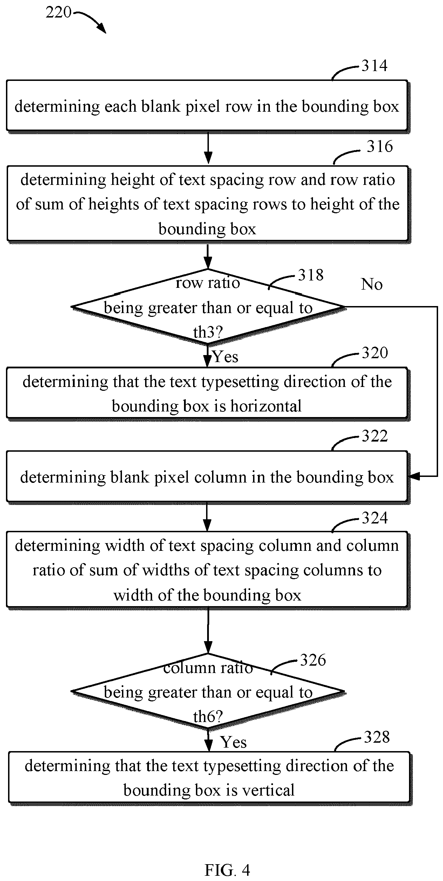

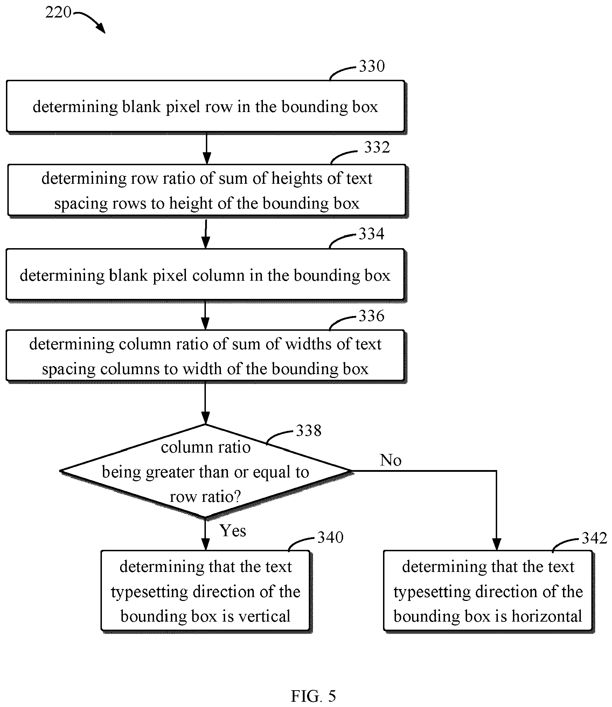

In the embodiment shown in FIG. 3, the text typesetting direction of the bounding box is determined based on the height-to-width ratio of the bounding box. This is based on the assumption or experience that for horizontally typeset text paragraphs, the width is usually greater than the height, while for vertically typeset text paragraphs, the height is usually greater than the width. However, in many cases, such assumption or experience is not always true, so there are cases where the typesetting direction cannot be determined only by the height-to-width ratio of the bounding box. In these cases, the embodiment of FIG. 3 may output wrong detection results, and thus other algorithms are required to intervene and correct the results. Therefore, the present disclosure also provides methods for determining the text typesetting direction based on the characteristics of the text paragraph in the bounding box as shown below in conjunction with FIG. 4 and FIG. 5. The method shown in FIG. 4 or FIG. 5 may be used alone to determine the text typesetting direction, or the method shown in FIG. 4 or FIG. 5 may also be used as a supplement to the method shown in FIG. 3, that is, it may be used to determine the text typesetting direction of the bounding box in case that the judgement result of the sub-step 310 is "No" (that is, the height-to-width ratio k of the bounding box is greater than the first threshold th1 and less than the second threshold th2).

FIG. 4 shows a schematic diagram of the step 220 for determining the text typesetting direction of the bounding box according to another embodiment of the present disclosure.

As shown in FIG. 4, the step 220 may include a sub-step 314 in which each blank pixel row in the bounding box 110 is determined. Here, a blank pixel row refers to a pixel row where no text stroke appears, that is, a pixel row with a background color, and it is not necessarily composed of white pixels. However, in most newspapers, magazines or books, the background color is usually white, so the criterion using white as the background color has great applicability. The specific implementations where the background color is a known color and an unknown color are respectively given below.

In an implementation, assuming that the background color of the picture 100 is basically white (as shown in FIG. 1), the sub-step 314 may further include calculating an average gray value of each pixel row in the bounding box 110, and determining whether the average gray value of each pixel row in the bounding box 110 is substantially equal to the gray value of the white pixel. If the average gray value of a pixel row is substantially equal to the gray value of the white pixel, it is determined that the pixel row is a blank pixel row.

Specifically, for example, several levels (such as 256 levels) may be got by dividing the colors between white and black logarithmically, which are also referred to as gray levels, where the gray value of the white pixel is 255 and the gray value of the black pixel is o. Then the gray values of all pixels in each pixel row in the bounding box 110 is summed up and divided by the width of the pixel row (that is, the number of pixels in the pixel row). The thus obtained average value is regarded as the average gray value of the pixel row.

If the average gray value of a pixel row is substantially equal to (or very close to) the gray value of a white pixel (within the range of [250, 255], for example), the pixel row is determined to be a blank pixel row, that is, the pixel row is determined to be in the spacing between two text rows.

Here, the sub-step 314 is described assuming that the picture 100 itself is a gray-scale image. However, when the picture 100 is not a gray-scale image, the sub-step 314 also includes converting the picture 100 (or the bounding box 110) to a gray-scale image, which will not be detailed here.

In addition, the sub-step 314 is described above by taking the background color of the picture 100 as white as an example. However, those skilled in the art may understand that the process of the above sub-step 314 may also be extended to any other known background color. For example, in case that a large number of pictures to be recognized have the same background color such as black, the process of the above sub-step 314 may be equivalently varied by comparing the average gray value of each pixel row and the gray value of the black pixel.

In addition, those skilled in the art may also understand that the above sub-step 314 is not limited to the above pixel level division method and the gray value setting method of the two extreme pixels (such as white and black), and any other equivalents maybe used instead.

In another implementation, the blank pixel row is determined not based on the average gray value of the pixel row but based on the gray value dispersion of the pixel row. Specifically, the sub-step 314 may further include: calculating the gray value dispersion of each pixel row in the bounding box 110, determining whether the gray value dispersion of each pixel row is substantially equal to zero, and if it is determined that the gray value dispersion of a pixel row is substantially equal to zero, it is determined that the pixel row is a blank pixel row. Here, the gray value dispersion may include the variance or mean square error of the gray values. However, those skilled in the art may understand that the present disclosure is not limited to this, and the gray value dispersion may also include any characteristic value that may reflect the uniformity of the gray value distribution.

In this manner, it is possible to determine whether a pixel row is a blank pixel row without knowing or assuming the background color in advance, thereby having higher applicability.

Returning to FIG. 3, after determining whether each pixel row in the bounding box 110 is a blank pixel row in the sub-step 314, in the sub-step 316, adjacent blank pixel rows may be combined to determine height of each text spacing row in the horizontal direction of the bounding box 110 and to determine the row ratio $r_r$ of sum of heights of all the text spacing rows to the height h of the bounding box 110. Here, as shown in FIG. 1, the text spacing row 101 (only one text spacing row 101 is exemplarily marked in FIG. 1) refers to the blank space between two adjacent text rows in the text paragraph in the bounding box 110, and it is usually composed of multiple adjacent blank pixel rows. The row ratio $r_r$ refers a ratio of the sum of the heights of all the text spacing rows 101 in the text paragraph in the bounding box 110 (for example, sum of the pixel numbers of the blank pixel rows) to the height h of the bounding box 110 (for example, the height in pixels).

Next, in the sub-step 318, it may be determined whether the row ratio $r_r$ is greater than or equal to a third threshold th3. If the judgment result of the sub-step 318 is "Yes", that is, it is determined that the row ratio $r_r$ is greater than or equal to the third threshold th3, in the sub-step 320, it may be determined that the text typesetting direction of the bounding box 110 is horizontal.

Additionally, in addition to considering the row ratio $r_r$ of the sum of the heights of the text spacing rows to the height of the bounding box, in the sub-step 318, it may also be determined whether the height of each text spacing row is greater than or equal to a fourth threshold th4. If the judgment result of the sub-step 318 is "Yes", that is, it is determined that the row ratio $r_r$ is greater than or equal to the third threshold th3 and the height of each text spacing row is greater than or equal to the fourth threshold th4, the text typesetting direction of the bounding box 110 is determined in the sub-step 320 to be horizontal.

That is to say, for horizontally typeset texts, the row ratio and height of the text spacing row are usually relatively large. Therefore, the accuracy of detection may be further improved by double inspection through these two factors.

In the sub-steps 316 to 320 of the foregoing embodiment, the text typesetting direction of the bounding box is determined based on the size and row ratio of the text spacing row. However, the above sub-steps 316 to 320 may also be equivalently implemented based on the size and row ratio of the text row to determine the text typesetting direction. Specifically, in the sub-step 316, after determining the sum of the heights of all the text spacing rows, sum of the heights of all the text rows may be determined based on the sum of the heights of all the text spacing rows and the height h of the bounding box 110, and a row ratio of the sum of the heights of all the text rows to the height h of the bounding box 110 may be calculated. In this case, in contrast to the row ratio of the text spacing rows, in the sub-step 318, it is determined whether the calculated row ratio of the text rows is less than or equal to a certain threshold, and it is determined that the text typesetting direction of the bounding box is horizontal if the row ratio of the text rows is less than or equal to the threshold.

Alternatively, in other embodiments, alternative to or in addition to the sub-steps 316 to 320, the text typesetting direction of the bounding box may be determined or verified based on the dispersion of the heights of the text rows in the bounding box 110. Specifically, the height of a text row between two adjacent text spacing rows may be determined based on the positions of the two adjacent text spacing rows. The dispersion of the heights of all the text rows in the bounding box 110 may be determined. Then it is determined whether the dispersion of the heights of all the text rows is less than or equal to a fifth threshold th5, and if it is determined that the dispersion of the heights of all the text rows is less than or equal to the fifth threshold th5, it is determined that the text typesetting direction of the bounding box 110 is horizontal.

Moreover, those skilled in the art may understand that determining the text typesetting direction of the bounding box 110 based on the characteristics of the text paragraph may also include a modification or combination of the foregoing manners. For example, similar to the dispersion of the heights of the text rows, the text typesetting direction of the bounding box 110 may be determined or verified by the dispersion of the heights of all the text spacing rows in the bounding box 110. For another example, the text typesetting direction of the bounding box 110 may also be determined by both the dispersion of the heights of the text rows and the dispersion of the heights of the text spacing rows, which will not be detailed here.

On the other hand, if the judgment result in the sub-step 318 is "No", that is, if it is determined that the row ratio $r_r$ is less than the third threshold th$_3$, it may be determined that the text typesetting direction of the bounding box 110 is horizontal.

Alternatively or additionally, the text typesetting direction of the bounding box may also be determined by calculating the width of the text spacing column and the column ratio. Specifically, as shown in FIG. 4, the step 220 may further include a sub-step 322 in which each blank pixel column in the bounding box 110 is determined. Here, similar to the blank pixel row, a blank pixel column refers to a pixel column where no text stroke appears, that is, a pixel column with the background color, and it is not necessarily composed of white pixels. However, in most newspapers, magazines or books, the background color is usually white, so the criterion using white as the background color has great applicability. The specific implementations where the background color is a known color and an unknown color are respectively given below. Here, the manner of determining the blank pixel column is similar to that of determining the blank pixel row in the aforementioned sub-step 314.

In an implementation, assuming that the background color of the picture 100 is basically white (as shown in FIG. 1), the sub-step 322 may further include calculating an average gray value of each pixel column in the bounding box 110, and determining whether the average gray value of each pixel column in the bounding box 110 is substantially equal to the gray value of the white pixel. If the average gray value of a pixel column is substantially equal to the gray value of the white pixel, it is determined that the pixel column is a blank pixel column. Here, it is also assumed that the picture 100 is a grayscale image, and if the picture 100 is not a grayscale image, the process of converting the picture 100 (or the bounding box 110) into a grayscale image is further included before the sub-step 322, which will not be detailed here.

Specifically, the gray levels between white and black pixels may be got as described above. Then the gray values of all pixels in each pixel column in the bounding box 110 is summed up and divided by the height of the pixel column (that is, the number of pixels in the pixel column). The thus obtained average value is regarded as the average gray value of the pixel column.

If the average gray value of a pixel column is substantially equal to (or very close to) the gray value of a white pixel, the pixel column is determined to be a blank pixel column, that is, the pixel column is determined to be in the spacing between two text columns.

The sub-step 322 is described above by taking the background color of the picture 100 as white as an example. However, those skilled in the art may understand that the process of the above sub-step 322 may also be extended to any other known background color. For example, in case that a large number of pictures to be recognized have the same background color (such as black), the process of the above sub-step 322 may be equivalently varied by comparing the average gray value of each pixel column and the gray value of the black pixel.

In addition, those skilled in the art may also understand that the above sub-step 322 is not limited to the above pixel level division method and the gray value setting method of the two extreme pixels (such as white and black), and any other equivalents maybe used instead.

In another implementation, the blank pixel column is determined not based on the average gray value of the pixel column but based on the gray value dispersion of the pixel column. Specifically, the sub-step 322 may further include: calculating the gray value dispersion of each pixel column in the bounding box 110, determining whether the gray value dispersion of each pixel column is substantially equal to zero, and if it is determined that the gray value dispersion of a pixel column is substantially equal to zero, it is determined that the pixel column is a blank pixel column.

In this manner, it is possible to determine whether a pixel column is a blank pixel column without knowing or assuming the background color in advance, thereby having higher applicability.

Continuing with FIG. 4, after determining in the sub-step 322 whether each pixel column in the bounding box 110 is a blank pixel column, in the sub-step 324, adjacent blank pixel columns may be combined to determine width of each text spacing column in the vertical direction of the bounding box 110 and to determine the column ratio $r_c$ of sum of the widths of all the text spacing columns and the width w of the bounding box 110. Here, as shown in FIG. 1, the text spacing column 102 (only one text spacing column 102 is exemplarily marked in FIG. 1) refers to the blank space between two adjacent text columns in the text paragraph in the bounding box 110, and it is usually composed of multiple adjacent blank pixel columns. The column ratio $r_c$ refers to a ratio of the sum of the widths of all the text spacing columns 102 in the text paragraph in the bounding box 110 (for example, sum of the pixel numbers of the blank pixel columns) to the width w of the bounding box 110 (for example, the width in pixels).

Next, in the sub-step 326, it may be determined whether the column ratio $r_c$ is greater than or equal to a sixth threshold th6. If the judgment result of the sub-step 326 is "Yes", that is, it is determined that the column ratio $r_c$ is greater than or equal to the sixth threshold th6, it may be determined that the text typesetting direction of the bounding box 110 is vertical.

Additionally, in addition to considering the column ratio $r_c$, in the sub-step 326, it may also be determined whether the width of each text spacing column is greater than or equal to a seventh threshold th7. If the judgment result of the sub-step 326 is "Yes", that is, it is determined that the column ratio $r_c$ is greater than or equal to the sixth threshold th6 and the width of each text spacing column is greater than or equal to the seventh threshold th7, the text typesetting direction of the bounding box 110 is determined in the sub-step 328 to be vertical.

That is to say, for vertically typeset texts, the column ratio and width of the text spacing column are usually relatively large. Therefore, the accuracy of detection may be further improved by double inspection through these two factors.

In the sub-steps 324 to 328 of the foregoing embodiment, the text typesetting direction of the bounding box is determined based on the size and column ratio of the text spacing column. However, the above sub-steps 314 to 328 may also be equivalently implemented based on the size and column ratio of the text column to determine the text typesetting direction. Specifically, in the sub-step 324, after determining the sum of the widths of all the text spacing columns, sum of the widths of all the text columns may be determined based on the sum of the widths of all the text spacing columns and the width w of the bounding box 110, and a column ratio of the sum of the widths of all the text columns to the width w of the bounding box 110 may be calculated. In this case, in contrast to the column ratio of the text spacing columns, in the sub-step 326, it is determined whether the calculated column ratio of the text columns is less than or equal to a certain threshold, and it is determined that the text typesetting direction of the bounding box is vertical if the column ratio of the text columns is less than or equal to the threshold,.

Alternatively, in other embodiments, alternative to or in addition to the sub-steps 324 to 328, the text typesetting direction of the bounding box may be determined or verified based on the dispersion of the widths of the text columns in the bounding box 110. Specifically, the width of a text column between two adjacent text spacing columns may be determined based on the positions of the two adjacent text spacing columns. The dispersion of widths of all the text columns in the bounding box 110 may be determined. Then it is determined whether the dispersion of widths of all the text columns is less than or equal to an eighth threshold th8, and if it is determined that the dispersion of the widths of all the text columns is less than or equal to the eighth threshold th8, it is determined that the text typesetting direction of the bounding box 110 is vertical.

Moreover, those skilled in the art may understand that determining the text typesetting direction of the bounding box 110 based on the characteristics of the text paragraph may also include a modification or combination of the foregoing manners. For example, similar to the dispersion of the widths of the text columns, the text typesetting direction of the bounding box 110 may be determined or verified by the dispersion of the widths of all the text spacing columns in the bounding box 110. For another example, the text typesetting direction of the bounding box 110 may also be determined by both the dispersion of the widths of the text columns and the dispersion of the widths of the text spacing columns, which will not be detailed here.

It should be noted that, FIG. 3 is described in the order of the sub-steps 314 to 328, however, those skilled in the art may understand that the present disclosure is not limited to the above specific order. In other embodiments, the process of the step 220 may include only the sub-steps 314 to 320, or only the sub-steps 322 to 328, or the sub-steps 322 to 328 may be executed before the sub-steps 314 to 320, which will not affect the scope of the disclosure.

Similar to the first threshold th1 and the second threshold th2, the third threshold $th_3$, the fourth threshold th4, the fifth threshold th5, the sixth threshold th6, the seventh threshold th7, the eighth threshold th8, and other thresholds may also be empirical values or statistical values, or preset values according to regulations such as publication specifications.

However, in some cases, these thresholds may not be determined in advance. In view of this, the present disclosure provides a further method capable of determining the text typesetting direction of the bounding box. FIG. 5 shows a schematic diagram of the step 220 for determining the text typesetting direction of the bounding box according to a further embodiment of the present disclosure.

Similar to the sub-steps 314 and 316 in the embodiment shown in FIG. 4, in the sub-steps 330 and 332 of the embodiment shown in FIG. 5, for each blank pixel row, a row ratio $r_r$ of the blank pixel row to all text spacing rows in the bounding box 110 is determined.

Similar to the sub-steps 322 and 324 in the embodiment shown in FIG. 4, in the embodiment shown in FIG. 5, in the sub-steps 334 and 336, for each blank pixel column, a column ratio $r_c$ of the blank pixel column to all text spacing columns in the bounding box 110 is determined.

In contrast to the embodiment shown in FIG. 4, in the embodiment shown in FIG. 5, in the sub-step 338, it is determined whether the column ratio $r_c$ is greater than or equal to the row ratio $r_r$.

If the judgment result of the sub-step 338 is "Yes", that is, if the column ratio $r_c$ is greater than or equal to the row ratio $r_r$, it is determined in the sub-step 340 that the text typesetting direction of the bounding box 110 is vertical.

On the other hand, if the judgment result of the sub-step 338 is "No", that is, if the column ratio $r_c$ is less than the row ratio $r_r$, it is determined in the sub-step 342 that the text typesetting direction of the bounding box 110 is horizontal.

Similarly, the embodiment shown in FIG. 5 may also be equivalently implemented based on the relationship between the row ratio of the text row and the column ratio of the text column to determine the text typesetting direction of the bounding box. Specifically, in the sub-step 332, after determining the sum of the heights of the text spacing rows, the sum of the heights of the text rows in the bounding box may be determined based on the sum of the heights of the text spacing rows and the height h of the bounding box, and a row ratio of the sum of the heights of the text rows to the height h of the bounding box. In the sub-step 336, after determining the sum of the widths of the text spacing columns, the sum of the widths of the text columns in the bounding box may be determined based on the sum of the widths of the text spacing columns and the width w of the bounding box, and the column ratio of the sum of the widths of the text columns to the width w of the bounding box may be calculated. In this case, in the sub-step 328, it is determined whether the row ratio of the text row is greater than or equal to the column ratio of the text column, and if the row ratio of the text rows is greater than or equal to the column ratio of the text columns, it is determined that the bounding box is horizontal, while if the row ratio of the text rows is smaller than the column ratio of the text columns, the bounding box is determined to be vertical.

It should be noted that although different implementations for determining the text typesetting direction of the bounding box according to the present disclosure are described above in conjunction with FIGS. 3 to 5, these implementations may be implemented independently or in combination. For example, the method shown in FIG. 4 or FIG. 5 may be used independently to determine the text typesetting direction of the bounding box, or may be combined with the method shown in FIG. 3 to determine the text typesetting direction of the bounding box. That is, FIG. 3 makes a preliminary determination based on the height-to-width ratio of the bounding box. In case that it cannot be determined based on the height-to-width ratio (as shown in FIG. 3 in case where the judgment result of the sub-step 310 is "No"), the method of FIG. 4 or FIG. 5 may be used to make a further determination. Taking the boxes 110, 120, 130, and 140 shown in FIG. 1 as an example, based on the method shown in FIG. 3, it may be determined that the text typesetting direction of the bounding boxes 130 and 140 is vertical, while for the boxes 110 and 120, the method shown in FIG. 4 or FIG. 5 should be combined to determine that the text typesetting direction of the bounding box 110 is horizontal, and the text typesetting direction of the bounding box 120 is vertical.

Returning to FIG. 2, after determining the text typesetting direction of the bounding box in the step 220, in the step 230, based on the text typesetting direction of the bounding box, the bounding box is input into a text recognition network corresponding to the text typesetting direction of the bounding box to recognize the texts therein.

For example, in the step 220, it is determined that the text typesetting direction of the bounding box 110 is horizontal. Therefore, in the step 230, the clipped image of the bounding box 110 may be input into an OCR (Optical Character Recognition) network for horizontal typesetting to recognize the texts therein.

For another example, in the step 220, it is determined that the text typesetting direction of the bounding boxes 120, 130, and 140 is vertical. Therefore, in the step 230, the clipped images of the bounding boxes 120, 130, and 140 may be input into an OCR network for vertical, respectively, to recognize the texts therein.

With the above solution, the text typesetting direction of mixed typeset texts is determined based on the geometric characteristics (such as the height-to-width ratio of the bounding box and/or the characteristics of the text paragraph (such as text characteristics or text spacing characteristics)) of the bounding box containing the text paragraph, and the accuracy of recognition is improved compared with using a single model. In addition, after the text typesetting direction of the mixed typeset texts is determined, the recognition may still be performed based on the recognition model trained with single typeset texts, avoiding the computational complexity caused by directly training using the mixed typeset texts.

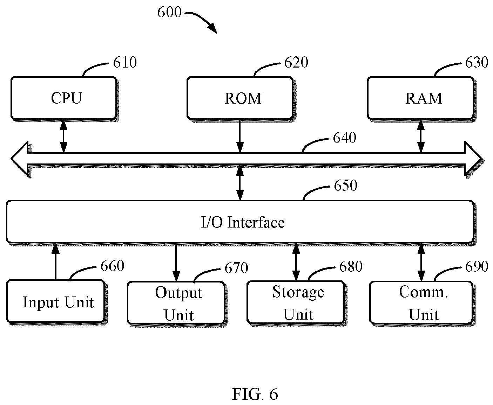

FIG. 6 shows a schematic block diagram of an exemplary device 600 that may be used to implement embodiments of the present disclosure. The device 600 may be, for example, a desktop computer or a laptop computer for text recognition. As shown in the figure, the device 600 may include one or more central processing units (CPU) 610 (only one is shown schematically in the figure), which may perform various appropriate actions and processing in accordance with computer program instructions stored in a read-only memory (ROM) 620 or the computer program instructions loaded from the storage unit 680 into the random access memory (RAM) 630. In the RAM 630, various programs and data required for the operation of the device 600 may also be stored. The CPU 610, the ROM 620, and the RAM 630 are interconnected through a bus 640. An input/output (I/O) interface 650 is also connected to the bus 640.

Multiple components in the device 600 are connected to the I/O interface 650, including: an input unit 660, such as a keyboard, a mouse, etc.; an output unit 670, such as various types of displays, speakers, etc.; and a storage unit 680, such as a magnetic disk, an optical disk, etc.; and a communication unit 690, such as a network card, a modem, a wireless communication transceiver, etc.. The communication unit 690 enables the device 600 to exchange information/data with other devices through a computer network such as the Internet and/or various telecommunication networks.

The method 200 described above may be executed by the processing unit 610 of the device 600, for example. For example, in some embodiments, the method 200 may be implemented as a computer software program, which is tangibly contained in a machine-readable medium, such as the storage unit 680. In some embodiments, part or all of the computer program may be loaded and/or installed on the device 600 via the ROM 620 and/or the communication unit 690. When the computer program is loaded into the RAM 630 and executed by the CPU 610, one or more operations of the method 600 described above may be performed. In addition, the communication unit 690 may support a wired or wireless communication function.

The method 200 and the device 600 for recognizing mixed typeset texts according to the present disclosure are described above with reference to the accompanying drawings. However, those skilled in the art may understand that the device 600 does not necessarily include all the components shown in FIG. 6, and it may include only some of the components necessary to perform the functions described in the present disclosure, and the connection manner thereof is not limited to that shown in the figure. For example, in case where the device 600 is a portable device such as a mobile phone, the device 600 may have a different structure than that in FIG. 6.

The present disclosure may be implemented as a method, a device, a chip circuit and/or a computer program product. The computer program product may include a computer-readable storage medium, on which computer-readable program instructions for performing various aspects of the present disclosure are contained. The chip circuit may include circuit units for performing various aspects of the present disclosure.

The computer-readable storage medium may be a tangible device that may hold and store instructions used by the instruction execution device. The computer-readable storage medium may be, for example, but not limited to, an electrical storage device, a magnetic storage device, an optical storage device, an electromagnetic storage device, a semiconductor storage device, or any suitable combination of the above. More specific examples (non-exhaustive list) of computer readable storage media include: portable computer disks, hard disks, random access memory (RAM), read only memory (ROM), erasable programmable read only memory (EPROM) or flash memory, static random access memory (SRAM), portable compact disk read-only memory (CD-ROM), digital versatile disk (DVD), memory stick, floppy disk, mechanical encoding device, punched card or a structure of protrusions in grooves with instructions stored thereon, and any suitable combination of the above. The computer-readable storage medium used here is not interpreted as a transient signal itself, such as radio waves or other freely propagating electromagnetic waves, electromagnetic waves propagating through waveguides or other transmission media (for example, light pulses through fiber optic cables), or electrical signals transmitted through electrical wires.

The computer-readable program instructions described herein may be downloaded from a computer-readable storage medium to various computing/processing devices, or downloaded to an external computer or external storage device via a network, such as the Internet, a local area network, a wide area network, and/or a wireless network. The network may include copper transmission cables, optical fiber transmission, wireless transmission, routers, firewalls, switches, gateway computers, and/or edge servers. The network adapter card or network interface in each computing/processing device receives computer-readable program instructions from the network, and forwards the computer-readable program instructions for storage in the computer-readable storage medium in each computing/processing device.

The computer program instructions used to perform the operations of the present disclosure may be assembly instructions, instruction set architecture (ISA) instructions, machine instructions, machine-related instructions, microcodes, firmware instructions, status setting data, or source codes or object codes written in any combination of one or more programming languages, the programming languages including object-oriented programming languages such as Smalltalk, C++, etc., and conventional procedural programming languages such as "C" language or similar programming languages. Computer readable program instructions may be executed entirely on the user's computer, partly on the user's computer, executed as an independent software package, executed partly on the user's computer and partly on a remote computer, or executed entirely on the remote computer or server. In case of a remote computer, the remote computer may be connected to the user's computer through any kind of network-including a local area network (LAN) or a wide area network (WAN), or it may be connected to an external computer (such as using an Internet service provider to connect to the Internet connection). In some embodiments, an electronic circuit, such as a programmable logic circuit, a field programmable gate array (FPGA), or a programmable logic array (PLA), may be customized by using the status information of the computer-readable program instructions. The computer-readable program instructions are executed to implement various aspects of the present disclosure.

Here, various aspects of the present disclosure are described with reference to flowcharts and/or block diagrams of methods, devices (systems) and computer program products according to embodiments of the present disclosure. It should be understood that each block of the flowchart and/or block diagram and the combination of blocks in the flowchart and/or block diagram may be implemented by computer readable program instructions.

These computer-readable program instructions may be provided to the processing unit of a general-purpose computer, a special-purpose computer, or other programmable data processing device, so as to produce a machine such that these instructions, when executed by the processing unit of the computer or other programmable data processing device, generate a device that implements the functions/actions specified in one or more blocks in the flowcharts and/or block diagrams. It is also possible to store these computer-readable program instructions in a computer-readable storage medium. These instructions make computers, programmable data processing apparatuses, and/or other devices work in a specific manner, so that the computer-readable medium storing instructions includes an article of manufacture, which includes instructions for implementing various aspects of the functions/actions specified in one or more blocks in the flowchart and/or block diagram.

It is also possible to load computer-readable program instructions on a computer, other programmable data processing devices, or other equipment, so that a series of operation steps are executed on the computer, other programmable data processing devices, or other equipment to produce a computer-implemented process , so that the instructions executed on the computer, other programmable data processing devices, or other equipment may implement the functions/actions specified in one or more blocks in the flowcharts and/or block diagrams.

The flowcharts and block diagrams in the accompanying drawings show the possible implementation architecture, functions, and operations of the system, methods, and computer program product according to multiple embodiments of the present disclosure. In this regard, each block in the flowchart or block diagram may represent a module, a program segment, or part of instructions, and the module, program segment, or part of instructions contains one or more components for implementing the specified logical functions. In some alternative implementations, the functions marked in the blocks may also occur in a different order than the order marked in the drawings. For example, two consecutive blocks may actually be executed in parallel, or they may sometimes be executed in the reverse order, depending on the functions involved. It should also be noted that each block in the block diagram and/or flowchart, and the combination of the blocks in the block diagram and/or flowchart, may be implemented by a dedicated hardware-based system that performs the specified functions or actions, or it maybe realized by a combination of dedicated hardware and computer instructions.

According to some embodiments of the present disclosure, a method for recognizing mixed typeset texts is provided, including: detecting one or more bounding boxes each containing a text paragraph from a picture; determining a text typesetting direction of each bounding box based on geometric characteristics of the bounding box, where the text typesetting direction includes horizontal and vertical; and inputting the bounding box into a text recognition network corresponding to the text typesetting direction, based on the text typesetting direction of the bounding box, to recognize texts in the bounding box.

According to some embodiments of the present disclosure, detecting one or more bounding boxes each containing a text paragraph from a picture comprises: inputting the picture into a text detection neural network to obtain text response regions in the picture; performing smoothing processing, binarization processing and neighborhood connection processing on the text response regions to obtain minimum bounding boxes; and performing typesetting analysis on the picture, and generating the bounding boxes based on the minimum bounding boxes according to result of the typesetting analysis.

According to some embodiments of the present disclosure, determining a text typesetting direction of each bounding box comprises: clipping a region of the bounding box from the picture; calculating a height-to-width ratio of the bounding box; determining whether the height-to-width ratio is less than or equal to a first threshold; and in response to determining that the height-to-width ratio is less than or equal to the first threshold, determining that the text typesetting direction of the bounding box is horizontal.

According to some embodiments of the present disclosure, determining a text typesetting direction of each bounding box further comprises: in response to determining that the height-to-width ratio is greater than the first threshold, determining whether the height-to-width ratio is greater than or equal to a second threshold, the second threshold being greater than the first threshold; and in response to determining that the height-to-width ratio is greater than or equal to the second threshold, determining that the text typesetting direction of the bounding box is vertical.

According to some embodiments of the present disclosure, determining a text typesetting direction of each bounding box comprises: determining each blank pixel row in the bounding box; and determining the text typesetting direction of the bounding box according to the blank pixel row in the bounding box.

According to some embodiments of the present disclosure, determining the text typesetting direction of the bounding box according to the blank pixel row in the bounding box comprises: combining adjacent blank pixel rows to determine height of each text spacing row in a horizontal direction of the bounding box; and determining the text typesetting direction of the bounding box according to the height of each text spacing row.

According to some embodiments of the present disclosure, determining the text typesetting direction of the bounding box according to the height of each text spacing row comprises: determining a row ratio of sum of heights of all text spacing rows to a height of the bounding box; determining whether the row ratio of the sum of the heights of all text spacing rows to the height of the bounding box is greater than or equal to a third threshold; and in response to determining that the row ratio is greater than or equal to the third threshold, determining that the text typesetting direction of the bounding box is horizontal.

According to some embodiments of the present disclosure, determining the text typesetting direction of the bounding box according to the height of each text spacing row comprises: determining height of a text row between two adjacent text spacing rows based on positions of the adjacent text spacing rows; determining dispersion of heights of all text rows in the bounding box; determining whether the dispersion of heights of all text rows is less than or equal to a fifth threshold; and in response to determining that the dispersion of heights of all text rows is less than or equal to the fifth threshold, determining that the text typesetting direction of the bounding box is horizontal.

According to some embodiments of the present disclosure, determining each blank pixel row in the bounding box comprises: calculating an average gray value of each pixel row in the bounding box; determining whether the average gray value of each pixel row in the bounding box is substantially equal to a gray value of a white pixel; and in response to determining that the average gray value of the pixel row is substantially equal to the gray value of the white pixel, determining that the pixel row is a blank pixel row.

According to some embodiments of the present disclosure, determining each blank pixel row in the bounding box comprises: calculating a gray value dispersion of each pixel row in the bounding box; determining whether the gray value dispersion of each pixel row in the bounding box is substantially zero; and in response to determining that the gray value dispersion of the pixel row is substantially zero, determining that the pixel row is a blank pixel row.

According to some embodiments of the present disclosure, determining whether the row ratio of the sum of the heights of all text spacing rows to the height of the bounding box is greater than or equal to a third threshold further comprises: determining whether the height of each text spacing row is greater than or equal to a fourth threshold; and determining that the text typesetting direction of the bounding box is horizontal further comprises: in response to determining that the height of each text spacing row is greater than or equal to the fourth threshold, determining that the text typesetting direction of the bounding box is horizontal.

According to some embodiments of the present disclosure, determining a text typesetting direction of each bounding box comprises: determine each blank pixel column in the bounding box; and determining the text typesetting direction of the bounding box according to the blank pixel column in the bounding box.

According to some embodiments of the present disclosure, determining the text typesetting direction of the bounding box according to the blank pixel column in the bounding box comprises: combining adjacent blank pixel columns to determine width of each text spacing column in a vertical direction of the bounding box; and determining the text typesetting direction of the bounding box according to the width of each text spacing column.

According to some embodiments of the present disclosure, determining the text typesetting direction of the bounding box according to the width of each text spacing column comprises: determining a column ratio of sum of widths of all text spacing columns to a width of the bounding box; determining whether the column ratio of sum of widths of all text spacing columns to the width of the bounding box is greater than or equal to a sixth threshold; and in response to determining that the column ratio of sum of widths of all text spacing columns to the width of the bounding box is greater than or equal to the sixth threshold, determining that the text typesetting direction of the bounding box is vertical.

According to some embodiments of the present disclosure, determining the text typesetting direction of the bounding box according to the width of each text spacing column comprises: determining width of a text column between two adjacent text spacing columns based on positions of the adjacent text spacing columns; determining dispersion of widths of all text columns in the bounding box; determining whether the dispersion of widths of all text columns is less than or equal to an eighth threshold; and in response to determining that the dispersion of widths of all text columns is less than or equal to the eighth threshold, determining that the text typesetting direction of the bounding box is vertical.

According to some embodiments of the present disclosure, determine each blank pixel column in the bounding box comprises: calculating an average gray value of each pixel column in the bounding box; determining whether the average gray value of each pixel column in the bounding box is substantially equal to a pixel value of a white pixel; and in response to determining that the average gray value of the pixel column is substantially equal to the pixel value of the white pixel, determining that the pixel column is a blank pixel column.

According to some embodiments of the present disclosure, determining each blank pixel column in the bounding box comprises: calculating a gray value dispersion of each pixel column in the bounding box; determining whether the gray value dispersion of each pixel column in the bounding box is substantially zero; and in response to determining that the gray value dispersion of the pixel column is substantially zero, determining that the pixel column is a blank pixel column.

According to some embodiments of the present disclosure, determining whether the column ratio is greater than or equal to a sixth threshold further comprises: determining whether the width of each text spacing column is greater than or equal to a seventh threshold; and determining that the text typesetting direction of the bounding box is vertical further comprises: in response to determining that the width of each text spacing column is greater than or equal to the seventh threshold, determining that the text typesetting direction of the bounding box is vertical.

According to some embodiments of the present disclosure, determining a text typesetting direction of each bounding box comprises: determining each blank pixel row in the bounding box; combining adjacent blank pixel rows to determine height of each text spacing row in a horizontal direction of the bounding box, and determining a row ratio of sum of heights of all text spacing rows to a height of the bounding box; determining each blank pixel column in the bounding box; combining adjacent blank pixel columns to determine width of each text spacing column in a vertical direction of the bounding box, and determining a column ratio of sum of widths of all text spacing columns and a width of the bounding box; determining whether the column ratio of sum of the widths of all text spacing columns to the width of the bounding box is greater than or equal to the row ratio of sum of the heights of all text spacing rows to the height of the bounding box; in response to determining that the column ratio of sum of the widths of all text spacing columns to the width of the bounding box is greater than or equal to the row ratio of sum of the heights of all text spacing rows to the height of the bounding box, determining that the text typesetting direction of the bounding box is vertical; and in response to determining that the column ratio of sum of the widths of all text spacing columns to the width of the bounding box is less than the row ratio of sum of the heights of all text spacing rows to the height of the bounding box, determining that the text typesetting direction of the bounding box is horizontal.

According to some embodiments of the present disclosure, determining a text typesetting direction of each bounding box comprises: determining each blank pixel row in the bounding box; combining adjacent blank pixel rows to determine height of each text spacing row in a horizontal direction of the bounding box, determining sum of the heights of all text spacing rows, determining sum of heights of all text rows based on the sum of the heights of all text spacing rows and the height of the bounding box, and determining a row ratio of the sum of the heights of all text rows to the height of the bounding box; determining each blank pixel column in the bounding box; combining adjacent blank pixel columns to determine width of each text spacing column in a vertical direction of the bounding box, determining sum of the widths of all text spacing columns, determining sum of widths of all text columns based on the sum of the widths of all text spacing columns and the width of the bounding box, and determining a column ratio of the sum of the widths of all text columns to the width of the bounding box; determining whether the row ratio of the sum of the heights of all text rows to the height of the bounding box is greater than or equal to the column ratio of the sum of the heights of all text rows to the width of the bounding box; in response to determining that the row ratio of the sum of the heights of all text rows to the height of the bounding box is greater than or equal to the column ratio of the sum of the heights of all text rows to the width of the bounding box, determining that the text typesetting direction of the bounding box is horizontal; and in response to determining that the row ratio of the sum of the heights of all text rows to the height of the bounding box is smaller than the column ratio of the sum of the heights of all text rows to the width of the bounding box, determining that the text typesetting direction of the bounding box is vertical.

According to some embodiments of the present disclosure, it is provided a device for recognizing mixed typeset texts including: a memory on which computer program codes are stored; and a processor configured to execute the computer program codes to implement the above method.

According to some embodiments of the present disclosure, it is provided a computer-readable storage medium having computer program codes stored thereon, which, when executed, implement the above method.

According to some embodiments of the present disclosure, it is provided a chip circuit comprising circuit units configured to implement the above method when powered on.

The various embodiments of the present disclosure have been described above, and the above description is exemplary, not exhaustive, and is not limited to the disclosed embodiments. Without departing from the scope and spirit of the illustrated embodiments, many modifications and changes are obvious to those of ordinary skill in the art. The terms used herein is intended to best explain the principles, practical applications, or technical improvements of the technologies in the market, or to enable other ordinary skilled in the art to understand the embodiments disclosed herein.

**Claims**

1. A computer-implemented method for recognizing mixed typeset texts, comprising:

   detecting one or more bounding boxes each containing a text paragraph from a picture;
   determining a text typesetting direction of each bounding box based on geometric characteristics of the bounding box, where the text typesetting direction includes horizontal and vertical; and
   inputting the bounding box into a text recognition network corresponding to the text typesetting direction, based on the text typesetting direction of the bounding box, to recognize texts in the bounding box.

2. The method of claim 1, wherein determining a text typesetting direction of each bounding box comprises:

   clipping a region of the bounding box from the picture;
   calculating a height-to-width ratio of the bounding box;
   determining whether the height-to-width ratio is less than or equal to a first threshold; and
   in response to determining that the height-to-width ratio is less than or equal to the first threshold, determining that the text typesetting direction of the bounding box is horizontal.

3. The method of claim 2, wherein determining a text typesetting direction of each bounding box further comprises:

   in response to determining that the height-to-width ratio is greater than the first threshold, determining whether the height-to-width ratio is greater than or equal to a second threshold, the second threshold being greater than the first threshold; and
   in response to determining that the height-to-width ratio is greater than or equal to the second threshold, determining that the text typesetting direction of the bounding box is vertical.

4. The method of claim 1 or 3, wherein determining a text typesetting direction of each bounding box comprises:

   determining each blank pixel row in the bounding box;
   combining adjacent blank pixel rows to determine height of each text spacing row in a horizontal direction of the bounding box; and
   determining the text typesetting direction of the bounding box according to the height of each text spacing row.

5. The method of claim 4, wherein determining the text typesetting direction of the bounding box according to the height of each text spacing row comprises:

   determining a row ratio of sum of heights of all text spacing rows to a height of the bounding box;
   determining whether the row ratio of the sum of the heights of all text spacing rows to the height of the bounding box is greater than or equal to a third threshold; and
   in response to determining that the row ratio is greater than or equal to the third threshold, determining that the text typesetting direction of the bounding box is horizontal.

6. The method of claim 4, wherein determining the text typesetting direction of the bounding box according to the height of each text spacing row comprises:

   determining height of a text row between two adjacent text spacing rows based on positions of the adjacent text spacing rows;
   determining dispersion of heights of all text rows in the bounding box;
   determining whether the dispersion of heights of all text rows is less than or equal to a fifth threshold; and

in response to determining that the dispersion of heights of all text rows is less than or equal to the fifth threshold, determining that the text typesetting direction of the bounding box is horizontal.

7. The method of claim 4, wherein determining each blank pixel row in the bounding box comprises:

calculating an average gray value of each pixel row in the bounding box;
determining whether the average gray value of each pixel row in the bounding box is substantially equal to a gray value of a white pixel; and
in response to determining that the average gray value of the pixel row is substantially equal to the gray value of the white pixel, determining that the pixel row is a blank pixel row.

8. The method of claim 4, wherein determining each blank pixel row in the bounding box comprises:

calculating a gray value dispersion of each pixel row in the bounding box;
determining whether the gray value dispersion of each pixel row in the bounding box is substantially zero; and
in response to determining that the gray value dispersion of the pixel row is substantially zero, determining that the pixel row is a blank pixel row.

9. The method of claim 5, wherein determining whether the row ratio of the sum of the heights of all text spacing rows to the height of the bounding box is greater than or equal to a third threshold further comprises:

determining whether the height of each text spacing row is greater than or equal to a fourth threshold; and
wherein determining that the text typesetting direction of the bounding box is horizontal further comprises:
in response to determining that the height of each text spacing row is greater than or equal to the fourth threshold, determining that the text typesetting direction of the bounding box is horizontal.

10. The method of any one of claims 1, 3 and 4, wherein determining a text typesetting direction of each bounding box comprises:

determine each blank pixel column in the bounding box;
combining adjacent blank pixel columns to determine width of each text spacing column in a vertical direction of the bounding box; and
determining the text typesetting direction of the bounding box according to the width of each text spacing column.

11. The method of claim 1, wherein determining a text typesetting direction of each bounding box comprises:

determining each blank pixel row in the bounding box;
combining adjacent blank pixel rows to determine height of each text spacing row in a horizontal direction of the bounding box, and determining a row ratio of sum of heights of all text spacing rows to a height of the bounding box;
determining each blank pixel column in the bounding box;
combining adjacent blank pixel columns to determine width of each text spacing column in a vertical direction of the bounding box, and determining a column ratio of sum of widths of all text spacing columns and a width of the bounding box;
determining whether the column ratio of sum of the widths of all text spacing columns to the width of the bounding box is greater than or equal to the row ratio of sum of the heights of all text spacing rows to the height of the bounding box;
in response to determining that the column ratio of sum of the widths of all text spacing columns to the width of the bounding box is greater than or equal to the row ratio of sum of the heights of all text spacing rows to the height of the bounding box, determining that the text typesetting direction of the bounding box is vertical; and
in response to determining that the column ratio of sum of the widths of all text spacing columns to the width of the bounding box is less than the row ratio of sum of the heights of all text spacing rows to the height of the bounding box, determining that the text typesetting direction of the bounding box is horizontal.

12. The method of claim 1, wherein determining a text typesetting direction of each bounding box comprises:

determining each blank pixel row in the bounding box;
combining adjacent blank pixel rows to determine height of each text spacing row in a horizontal direction of the bounding box, determining sum of the heights of all text spacing rows, determining sum of heights of all text rows based on the sum of the heights of all text spacing rows and the height of the bounding box, and determining a row ratio of the sum of the heights of all text rows to the height of the bounding box; determining each blank pixel column in the bounding box; combining adjacent blank pixel columns to determine width of each text spacing column in a vertical direction of the bounding box, determining sum of the widths of all text spacing columns, determining sum of widths of all text columns based on the sum of the widths of all text spacing columns and the width of the bounding box, and determining a column ratio of the sum of the widths of all text columns to the width of the bounding box; determining whether the row ratio of the sum of the heights of all text rows to the height of the bounding box is greater than or equal to the column ratio of the sum of the heights of all text rows to the width of the bounding box; in response to determining that the row ratio of the sum of the heights of all text rows to the height of the bounding box is greater than or equal to the column ratio of the sum of the heights of all text rows to the width of the bounding box, determining that the text typesetting direction of the bounding box is horizontal; and in response to determining that the row ratio of the sum of the heights of all text rows to the height of the bounding box is smaller than the column ratio of the sum of the heights of all text rows to the width of the bounding box, determining that the text typesetting direction of the bounding box is vertical.

13. A device for recognizing mixed typeset texts, comprising:

a memory on which computer program codes are stored; and
a processor configured to execute the computer program codes to implement the method according to any one of claims 1 to 12.

14. A computer program product comprising sections of program codes, wherein when the computer program product is executed on one or more computing devices, the sections of program codes implement the method according to any one of claims 1 to 12.

15. A chip circuit comprising circuit units configured to implement the method according to any one of claims 1 to 12 when powered on.

FIG. 1

200

detecting bounding boxes from the picture — 210

determining the text typesetting direction of each bounding box based on the geometric characteristics of the bounding box — 220

inputting the bounding box into a text recognition network corresponding to the text typesetting direction to recognize the texts therein — 230

FIG. 2

clipping the region of a bounding box from the picture ⟋302

calculating the height-to-width ratio of the bounding box ⟋304

height-to-width ratio being less than or equal to th1? ⟋306

Yes

No

height-to-width ratio being greater than or equal to th2? ⟋310

determining that the text typesetting direction of the bounding box is horizontal ⟋308

Yes ⟋312

determining that the text typesetting direction of the bounding box is vertical

220⟍

FIG. 3

220

314

determining each blank pixel row in the bounding box

316

determining height of text spacing row and row ratio of sum of heights of text spacing rows to height of the bounding box

318

row ratio being greater than or equal to th3?

No

Yes

320

determining that the text typesetting direction of the bounding box is horizontal

322

determining blank pixel column in the bounding box

324

determining width of text spacing column and column ratio of sum of widths of text spacing columns to width of the bounding box

326

column ratio being greater than or equal to th6?

Yes

328

determining that the text typesetting direction of the bounding box is vertical

FIG. 4

220

330

determining blank pixel row in the bounding box

332

determining row ratio of sum of heights of text spacing rows to height of the bounding box

334

determining blank pixel column in the bounding box

336

determining column ratio of sum of widths of text spacing columns to width of the bounding box

338

column ratio being greater than or equal to row ratio?

No

Yes

340

determining that the text typesetting direction of the bounding box is vertical

342

determining that the text typesetting direction of the bounding box is horizontal

FIG. 5

600

610
CPU

620
ROM

630
RAM

640

650
I/O Interface

660
Input Unit

670
Output
Unit

680
Storage
Unit

690
Comm.
Unit

FIG. 6

Europäisches
Patentamt
European
Patent Office
Office européen
des brevets

# EUROPEAN SEARCH REPORT

Application Number

EP 20 21 6900

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/266431 A1 (TALLMAN CHARLES DAVID [US]) 29 August 2019 (2019-08-29)<br>* paragraph [0001] - paragraph [0004] *<br>* paragraph [0033]; figure 1 *<br>* paragraph [0073] - paragraph [0095] *<br>* figure 10 *<br>----- | 1-14 | INV.<br>G06K9/00<br>G06K9/34 |
| T | FAURE CLAUDIE ET AL: "Simultaneous detection of vertical and horizontal text lines based on perceptual organization", PROCEEDINGS OF SPIE, vol. 7247, 18 January 2009 (2009-01-18), page 72470M, XP055799875, Orlando, Florida ISSN: 0277-786X, DOI: 10.1117/12.805504<br>* Section 3 ("Labelled connected components") *<br>----- | | |
| T | YUCUN PAN ET AL: "Document layout analysis and reading order determination for a reading robot", TENCON 2010 - 2010 IEEE REGION 10 CONFERENCE, IEEE, PISCATAWAY, NJ, USA, 21 November 2010 (2010-11-21), pages 1607-1612, XP031898213, DOI: 10.1109/TENCON.2010.5686038 ISBN: 978-1-4244-6889-8<br>* Sections I, III.A and IV. *<br>----- | | TECHNICAL FIELDS SEARCHED (IPC)<br><br>G06K |

The present search report has been drawn up for all claims

| Place of search | Date of completion of the search | Examiner |
|---|---|---|
| Munich | 30 April 2021 | Reino, Bernardo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P04C01)

**EP 3 846 076 A1**

## ANNEX TO THE EUROPEAN SEARCH REPORT
## ON EUROPEAN PATENT APPLICATION NO.

EP 20 21 6900

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2021

| Patent document cited in search report | Publication date | Patent family member(s) | Publication date |
|---|---|---|---|
| US 2019266431 A1 | 29-08-2019 | NONE | |

EPO FORM P0459

For more details about this annex : see Official Journal of the European Patent Office, No. 12/82